# EUROPÄISCHE PATENTSCHRIFT

(11) **EP 3 126 935 B1**
(45) Veröffentlichungstag und Bekanntmachung des Hinweises auf die Patenterteilung: **06.06.2018**
(21) Anmeldenummer: 15717652.0
(22) Anmeldetag: 02.04.2015
(51) Int. Cl.: B60R 1/04, B60R 1/12, G06F 3/03, G06F 3/01, B60R 1/08

(54) **SCHWENKBARER INNENSPIEGEL FÜR EIN FAHRZEUG**
PIVOTABLE INTERNAL MIRROR FOR A VEHICLE
RÉTROVISEUR INTÉRIEUR PIVOTANT POUR UN VÉHICULE

(30) Priorität: 03.04.2014 EP 14163459
(43) Veröffentlichungstag der Anmeldung: 08.02.2017
(73) Patentinhaber: SMR Patents S.à.r.l., 2453 Luxembourg (LU)
(72) Erfinder: WIECZOREK, Romeo, 73732 Esslingen (DE)
(74) Vertreter: Weber-Bruls, Dorothée
(86) Internationale Anmeldenummer: PCT/IB2015/052439
(87) Internationale Veröffentlichungsnummer: WO 2015/151059

(56) Entgegenhaltungen:
- EP-A1- 1 013 503
- EP-A1- 1 593 550
- EP-A2- 0 286 401
- DE-A1-102011 089 195

## Beschreibung

Die vorliegende Erfindung betrifft einen schwenkbaren Innenspiegel für ein Fahrzeug, ein Fahrzeug mit solch einem schwenkbaren Innenspiegel und ein Verfahren hierzu.

Fahrerassistenzsysteme nehmen auf Basis von Umgebungssensoren mittels Radar, Video, Infrarot und Ultraschall das Umfeld eines Fahrzeugs wahr und interpretieren es. Sie unterstützen den Fahrer in vielen Fahrsituationen und erhöhen dadurch Fahrkomfort und Fahrsicherheit. Fahrerassistenzsysteme tragen zu mehr Sicherheit bei, indem sie einen Fahrer in kritischen Situationen, in denen ein schnelles und sicheres Handeln notwendig ist, unterstützen. In Gefahrensituationen, in denen der Fahrer z.B. durch plötzlich auftretende Blendung durch ein hinter ihm fahrendes Fahrzeug in seiner Reaktionsfähigkeit beeinträchtigt wird, ist eine Unterstützung des Fahrers durch technische Hilfsmittel wünschenswert.

Die EP 1 593 550 A1 betrifft einen Innenspiegel für ein Fahrzeug mit einem Tragarm, der im Fahrzeug befestigbar ist, und mit einer Verstelleinrichtung, die am Tragarm einstellbar gelagert ist, wobei an der Verstelleinrichtung ein Keilspiegelglas mittelbar oder unmittelbar befestigt ist, das Keilspiegelglas durch Betätigung der Verstelleinrichtung zwischen einer Normalstellung und einer Abblendstellung verstellbar ist, zur Betätigung der Verstelleinrichtung eine Antriebseinrichtung vorgesehen ist, und im Innenspiegel zumindest ein elastisches Spannelement vorgesehen ist, mit dem die Verstelleinrichtung in der Normalstellung und/oder der Abblendstellung elastisch verspannt wird. Dabei kann die Antriebseinrichtung von einem lichtempfindlichen Sensor, insbesondere einem Differenzlichtsensor, angesteuert werden. Eine Schaltung zum Verstellen eines Innenspiegels zwischen einer Normalstellung und einer Abblendstellung wird in der EP 0 286 401 A2 beschrieben.

Ein Kraftfahrzeug-Innenrückspiegel gemäß der EP 1 013 503 A1 weist einen Stützkörper einer reflektierenden Platte, die beweglich gegen die Wirkung eines Federmittels ist, auf, um in eine Blendschutzposition nach Aktivierung eines Formgedächtnisdrahts bewegt zu werden.

In der DE 10 2011 089 195 A1 werden eine Vorrichtung und ein Verfahren zur berührungslosen Erfassung von Gegenständen und/oder Personen beschrieben, um damit einen gewünschten Bedienungsvorgang auszuführen.

Es ist die Aufgabe der vorliegenden Erfindung, dem Fahrer eines Fahrzeugs Mittel zu verschaffen, um eine Gefahrensituation aufgrund von Blendung durch ein hinter ihm fahrendes Fahrzeug einfach abzuwehren.

Diese Aufgabe wird durch einen schwenkbaren Innenspiegel für ein Fahrzeug gelöst, der mit einer Spiegelfläche, insbesondere in Form einer ersten Fläche eines Keilspiegels, einer Sensoreinrichtung zur Erfassung zumindest einer Geste eines Fahrers des Fahrzeugs und/oder auf die erste Fläche des Keilspiegels auftreffenden Lichts, und
einer Schwenkeinrichtung zum Verschwenken der Spiegelfläche von einer Normalposition in zumindest eine Abblendposition, in der eine Blendung des Fahrers durch an der Spiegelfläche reflektiertes Licht reduziert ist, ausgerüstet ist, wobei die Schwenkeinrichtung in Abhängigkeit zumindest eines Ausgabesignals der Sensoreinrichtung aktivierbar ist, wobei die die Sensoreinrichtung für eine Lichtlaufzeitmessung geeigneten und Bestandteil einer Bedieneinrichtung für die Schwenkeinrichtung ist, und wobei die Bedieneinrichtung innerhalb eines ersten Bereichs des Innenspiegels Bewegungsmuster erkennt und/oder innerhalb eines zweiten Bereichs des Innenspiegels zumindest eine virtuelle Taste bereitstellt.

Dabei kann vorgesehen sein, dass die Sensoreinrichtung zumindest einen ersten Sensor in Form eines TOF-Sensors, insbesondere umfassend eine TOF-Kamera, umfasst, wobei vorzugsweise die Sensoreinrichtung zudem zumindest einen zweiten Sensor zur Erfüllung einer ALS-Funktion umfasst.

Der erste Sensor kann auf der die Spiegelfläche darbietenden Seite des Innenspiegels, insbesondere an der Spiegelfläche, angebracht sein, und/oder ein erster zweiter Sensor kann auf der die Spiegelfläche darbietenden Seite des Innenspiegels, insbesondere an der Spiegelfläche, angebracht sein, und/oder ein zweiter zweiter Sensor kann auf der der Spiegelfläche gegenüberliegenden Seite des Innenspiegels, insbesondere an der der Spiegelfläche gegenüberliegenden Fläche des Keilspiegels, angebracht sein, wobei vorzugsweise der erste Sensor und der erste zweite Sensor in einem ausgeformt sind.

Es wird auch vorgeschlagen, dass die Schwenkeinrichtung in Abhängigkeit eines Vergleichs von Ausgabesignalen des ersten und zumindest eines zweiten Sensors, vorzugsweise durch Differenzbildung, aktivierbar ist, und/oder die Schwenkeinrichtung in Abhängigkeit eines Vergleichs von Ausgabesignalen des ersten zweiten und des zweiten zweiten Sensors, vorzugsweise durch Differenzbildung, aktivierbar ist.

Vorteilhafterweise wird zudem vorgeschlagen, dass die Schwenkeinrichtung in Abhängigkeit von Signalen einer Einrichtung des Fahrzeuges aktivierbar ist, die charakteristisch für die Lichtverhältnisse in der Umgebung des Fahrzeuges ist, insbesondere umfassend eine Beleuchtungseinrichtung des Fahrzeugs , wie in Form von Scheinwerfern und/oder einer Fahrzeuginnenbeleuchtung, und/oder einen Zeitgeber und/oder eine Positionsbestimmungseinrichtung.

Bevorzugte Innenspiegel nach der Erfindung sind dadurch gekennzeichnet, dass die Bedieneinrichtung innerhalb eines ersten Abstandsintervalls zur Spiegelfläche Bewegungsmuster erkennt und/oder innerhalb eines zweiten Abstandsintervalls zumindest eine virtuelle Taste bereitstellt, wobei das erste Abstandsintervall in dem ersten Bereich der Bedieneinrichtung und das zweite Abstandsintervall in dem zweiten Bereich der Bedieneinrichtung bereitgestellt ist.

Dabei kann das zweite Abstandsintervall näher an der Spiegelfläche als das erste Abstandsintervall angeordnet sein.

Ferner kann vorgesehen sein, dass die Schwenkeinrichtung einen Formgedächtnis-Aktuator zum Verschwenken der Spiegelfläche umfasst, wobei vorzugsweise der Formgedächtnis-Aktuator einen Formgedächtnis-Draht umfasst, der ansprechend auf einen Stromfluss durch den Formgedächtnis-Draht seine Länge verändert.

Dabei kann vorgesehen sein, dass die Bedieneinrichtung ausgelegt ist, den Formgedächtnis-Draht mit Strom zu versorgen, insbesondere aus einer Stromversorgung des Fahrzeugs.

Auch wird vorgeschlagen, dass der Formgedächtnis-Draht auf einer ersten Gewinderolle aufgerollt ist und ansprechend auf den Stromfluss eine Drehbewegung der ersten Gewinderolle bewirkt, wobei vorzugsweise die erste Gewinderolle eine Antriebsachse des Innenspiegels bildet und ausgelegt ist, die Spiegelfläche zumindest um einen ersten Drehwinkel zu drehen.

Dabei kann vorgesehen sein, dass der Formgedächtnis-Draht auf einer zweiten Gewinderolle aufgerollt ist, die ausgelegt ist, die Spiegelfläche um zumindest einen zweiten Drehwinkel zu drehen, wobei vorzugsweise der Durchmesser der zweiten Gewinderolle sich von dem Durchmesser der ersten Gewinderolle unterscheidet.

Die Schwenkeinrichtung kann einen weiteren Aktuator umfassen, der ausgelegt ist, die Spiegelfläche in die Normalposition zurückzubewegen, wobei vorzugsweise der weitere Aktuator einen zweiten Formgedächtnis-Aktuator oder ein Federelement umfasst.

Die Erfindung liefert auch ein Fahrzeug mit einem erfindungsgemäßen schwenkbaren Innenspiegel, das gekennzeichnet ist durch eine Kontrolleinrichtung in Verbindung mit der Sensoreinrichtung, der Schwenkeinrichtung, der Bedieneinrichtung, einer Einrichtung, die charakteristisch für die Lichtverhältnisse in der Umgebung des Fahrzeuges ist, einer Beleuchtungseinrichtung, wie in Form von Scheinwerfern und/oder einer Fahrzeuginnenbeleuchtung, einem Zeitgeber und/oder einer Positionsbestimmungseinrichtung.

Ferner liefert die Erfindung noch ein Verfahren zum Verschwenken eines erfindungsgemäßen schwenkbaren Innenspiegels für ein erfindungsgemäßes Fahrzeug, das durch folgende Schritte gekennzeichnet ist: Detektieren der Bewegung eines Fahrers des Fahrzeugs, insbesondere einer Armbewegung des Fahrers in Richtung des Innenspiegels oder eines Fingers innerhalb eines bestimmten Bereichs des Innenspiegels, und/oder von auf den Innenspiegel auftreffendem Licht und Auslösen einer Bewegung des Innenspiegels von einer Normalposition in zumindest eine Abblendposition und/oder von der Abblendposition in die Normalposition in Abhängigkeit von dem Ergebnis der Detektion.

Dabei kann vorgesehen sein, dass beim Wechsel von der Normalposition in die Abblendposition und/oder von der Abblendposition in die Normalposition eine Fahrzeugfunktion, insbesondere eine Einstellung einer Beleuchtungseinrichtung, und/oder eine Zeitinformation und/oder ein Fahrzeugstandort berücksichtig werden kann, und/oder ein Fahrer des Fahrzeugs auswählen kann, ob der Wechsel von der Normalposition in die Abblendposition und/oder von der Abblendposition in die Normalposition automatisch über eines Gestensteuerung oder durch Betätigen einer virtuellen Taste stattfindet, wobei vorzugsweise bei Erfassung bestimmter, vorgegebener Lichtverhältnisse ein automatischer Wechsel eingeleitet wird.

Die vorliegende Erfindung basiert auf der Erkenntnis, dass eine Blendwirkung durch ein hinter dem Fahrzeug fahrendes Fahrzeug insbesondere in der Dunkelheit durch den Innenspiegel des Fahrzeugs verursacht wird. Klappt man diesen in einer Abblendposition um, so ist der Strahlengang unterbrochen und die Blendwirkung tritt nicht mehr ein. Um das Umklappen einfach und sicher zu gestalten, verfügt ein erfindungsgemäßer Innenspiegel über eine Schwenkeinrichtung, die ausgelegt ist, den Innenspiegel von einer Normalposition in eine Abblendposition zu bewegen, wobei in der Abblendposition eine Blendung des Fahrers durch den Innenspiegel reduziert ist. Ferner verfügt solch ein Innenspiegel über eine Sensoreinrichtung, die z.B. eine Bedieneinrichtung umfasst und ausgelegt ist, die Schwenkeinrichtung wahlweise automatisch oder ansprechend auf eine Bewegung des Fahrers zu aktivieren. Die bewegungsgesteuerte Aktivierung erfolgt dabei mittels Gestensteuerung des Fahrers, beispielsweise durch eine Bewegung des Arms oder der Hand des Fahrers in Richtung auf den Innenspiegel, oder durch Betätigung einer virtuellen Taste.

Um die Erfindung im Detail zu beschreiben, werden die folgenden Abkürzungen und Bezeichnungen verwendet:
- FGL:: Formgedächtnislegierungen (FGL; englisch: Shape Memory Alloy - SMA), oft auch als "Memorymetalle" bzw. "Gedächtnismetalle" bezeichnet, sind spezielle Metalle, die in zwei unterschiedlichen Kristallstrukturen existieren können und sich an eine frühere Formgebung trotz nachfolgender starker Verformung scheinbar "erinnern" können.
- LED:: Leuchtdiode.
- EC-Glas:: abblendendes elektrochromatisches Spiegelglas.
- TOF:: (englisch: Time of Flight) -TOF-Sensoren stellen eine Sensoreinrichtung zur Distanzmessung mittels Laufzeitbestimmung dar.
- ALS:: (englisch: Ambient Light Sensor)-- Sensoren mit ALS-Funktion ermöglichen eine Helligkeitserfassung ähnlich einem menschlichen Auge.

Im Folgenden wird ein Innenspiegel mit Abblendfunktion und einer Gestensteuerung beschrieben, der für einen Fahrer sehr einfach zu bedienen ist. Der Fahrer kann insbesondere mit Hilfe einer Gestensteuerung durch eine einfache Handbewegung in Richtung Innenspiegel einen Aktuator einer Schwenkeinrichtung starten, der den Spiegel in eine Position bewegt, die den Fahrer nicht mehr blendet. Bei Nutzung eines SMA-Aktuators kann der Spiegel geräuschlos bewegt werden. Zudem ist er bedeutend günstiger in der Herstellung als ein Spiegel mit EC-Glas. Der Vorteil eines gestengesteuerten Innenspiegels ist, dass der Fahrer des Fahrzeugs in Situationen, in denen er durch hinter ihm fahrende Fahrzeuge geblendet wird, den Innenspiegel durch eine einfache Bewegung abklappen kann, so dass er nicht mehr geblendet wird. Er kann daher unabhängig von der durch die Blendung beeinträchtigten visuellen Wahrnehmung durch einfache Gestensteuerung die Blendung reduzieren bzw. abstellen und sich aus der Gefahrensituation begeben. Der schwenkbare Innenspiegel ist einfach zu bedienen. Bereits eine einfache Bewegung des Arms oder der Hand hin zum Innenspiegel reicht aus, um den Innenspiegel abzuklappen.

Es hat sich als besonders vorteilhaft herausgestellt, wenn der Sensor, der zur Erfassung einer Bewegung eines Fahrers eingesetzt wird, um in Abhängigkeit von einer erfassten Bewegung eine Schwenkeinrichtung aktivieren zu können, ein TOF-Sensor ist, also zur Lichtlaufzeitmessung geeignet ist. Solch ein Sensor kann mit einem ALS-Sensor kombiniert sein, um sowohl eine Intensität als auch eine Entfernung zu erfassen, wodurch zwischen einer Bewegung eines Beifahrers und eines Fahrers unterschieden werden kann, so dass also Bewegungen eines Beifahrers ausgeblendet werden können. Ferner spricht der Sensor im gleichen Maße auf einen Gegenstand in schwarz oder weiß und somit eine Hand mit oder ohne schwarzen Handschuh an und ist somit optimal zur Erfassung einer Fahrergeste.

Auch kann ein weiterer ALS-Sensor die Außenhelligkeit eines Fahrzeuges erfassen, also die Menge an den Fahrer durch die Windschutzscheibe seines Fahrzeugs erreichendem Licht. Mittels eines Vergleichs dieses Lichts mit dem vom Innenspiegel reflektierten Licht kann eine Verbesserung beim Abklappen bewirkt werden. So kann dann auch auf das Hineinfahren in eine oder Herausfahren aus einem Tunnel reagiert werden.

Weitere Ausführungsbeispiele werden Bezug nehmend auf die beiliegenden, schematischen Zeichnungen erläutert. Es zeigen:
- Figur la: eine Darstellung eines schwenkbaren Innenspiegels für ein Fahrzeug gemäß einer ersten erfindungsgemäßen Ausführungsform;
- Figur 1b: eine weitere Darstellung des Innenspiegels von Figur 1a;
- Figur 2a: eine Draufsicht auf einen schwenkbaren Innenspiegel für ein Fahrzeug gemäß einer zweiten erfindungsgemäßen Ausführungsform;
- Figur 2b: eine Schnittansicht durch einen Keilspiegel des Innenspiegels von Figur 2a;
- Figur 2c: eine Vergrößerung eines Abschnitts A der Figur 2a;
- Figur 3: eine dreidimensionale Darstellung eines gestensteuerbaren, schwenkbaren Innenspiegels für ein Fahrzeug gemäß einer dritten erfindungsgemäßen Ausführungsform;
- Figur 4: eine Draufsicht eines zweiachsigen Mini-Jo für einen gestensteuerbaren Innenspiegel der Erfindung;
- Figur 5: eine Seitenansicht des zweiachsigen Mini-Jo aus Figur 4;
- Figur 6: eine Draufsicht eines dreiachsigen Mini-Jo für einen gestensteuerbaren Innenspiegel der Erfindung;
- Figur 7: eine dreidimensionale Darstellung eines Antriebs für einen gestensteuerbaren Innenspiegel, der als Jo mit Federelement realisiert;
- Figur 8a: eine Darstellung einer Sensoreinrichtung für einen gestensteuerbaren Innenspiegel der Erfindung;
- Figur 8b: eine Darstellung einer alternativen Sensoreinrichtung für einen gestensteuerbaren Innenspiegel der Erfindung; und
- Figur 9: eine Darstellung eines erfindungsgemäßen Verfahrens zur gestengesteuerten Schwenkung eines Innenspiegels für ein Fahrzeug.

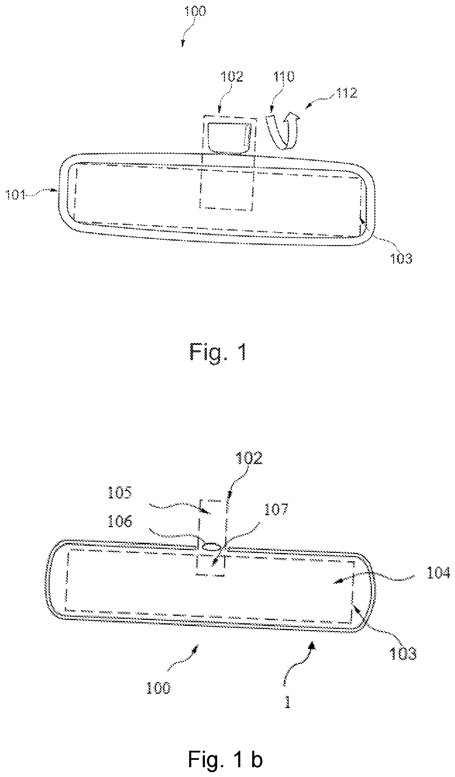

Figur la zeigt eine schematische Darstellung eines schwenkbaren Innenspiegels 100 für ein Fahrzeug gemäß einer ersten Ausführungsform der Erfindung. Der schwenkbare Innenspiegel 100 weist einen Rahmen 101, eine Schwenkeinrichtung 102 und eine Bedieneinrichtung 103 auf. Die Schwenkeinrichtung 102 kann dabei den Innenspiegel 100 samt seinem Keilspiegel 104 von einer Normalposition 110 in eine Abblendposition 112 bewegen. Die Normalposition 110 kann die in der Figur 1a dargestellte Position sein, bei der der Fahrer im Innenspiegel 100 hinter ihm fahrende Fahrzeuge bei Tageslicht gut erkennen kann. Die Abblendposition 112 kann eine Position sein, bei der eine Blendung des Fahrers durch den Innenspiegel 100 bei Nachtfahrten durch Scheinwerfer folgender Fahrzeuge zumindest reduziert ist. Bei der Abblendposition 112 kann es sich dabei um eine Position handeln, in der der gesamte Innenspiegel 100, wie in der Figur la dargestellt, nach oben geklappt ist, so dass der reflektierte Strahlengang von den Lichtern eines hinter dem Fahrzeug fahrenden weiteren Fahrzeugs zu den Augen des Fahrers unterbrochen ist. Die Abblendposition 112 kann auch eine Position sein, in welcher nur der Keilspiegel 104 verschwenkt wird, selbst zu einer Seite oder nach unten. Es sind verschiedene Drehwinkel bzw. Klappwinkel möglich.

Die Bedieneinrichtung 103 kann von dem Fahrer dazu genutzt werden, die Schwenkeinrichtung 102 zu aktivieren, insbesondere ansprechend auf eine Bewegung oder Geste des Fahrers. Bei der Bewegung kann es sich um eine Bewegung mit einem Arm oder einer Hand in Richtung der Bedieneinrichtung 103 handeln. Beispielsweise kann die Bedieneinrichtung 103 auf eine gewisse Geschwindigkeit reagieren, mit der der Fahrer die Hand in Richtung der Bedieneinrichtung 103 bewegt.

In einer erfindungsgemäßen Ausführungsform kann die Schwenkeinrichtung 102 einen ersten Formgedächtnis-Aktuator aufweisen, mit dem der Innenspiegel 100 in die Abblendposition 112 bewegt werden kann. Ein solcher Formgedächtnis-Aktuator kann eine Formgedächtnislegierung - FGL (englisch: Shape Memory Alloy - SMA) umfassen. Dabei kann es sich um eine Metalllegierung handeln, die in zwei unterschiedlichen Kristallstrukturen existieren kann, so dass sich der erste Formgedächtnis-Aktuator an eine frühere Formgebung trotz nachfolgender starker Verformung erinnern und wieder in seine ursprüngliche Form versetzen kann. Die ursprüngliche Form kann die Normalposition 110 sein, und die verformte Form kann die Abblendposition 112 sicherstellen.

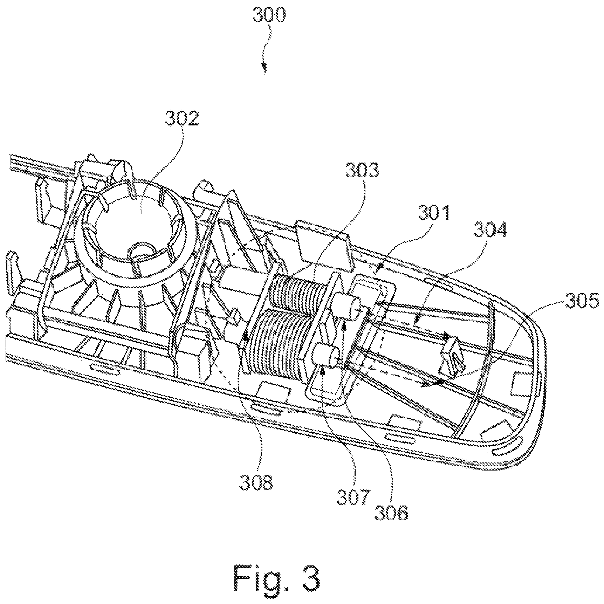

In einer vorteilhaften Ausführungsform der Erfindung kann der erste Formgedächtnis-Aktuator einen Formgedächtnis-Draht umfassen, der ansprechend auf einen Stromfluss durch den Formgedächtnis-Draht seine Länge verändert. Der Stromfluss durch den Draht kann eine Temperaturerhöhung im Draht bewirken, so dass dieser sich ausdehnen kann. So kann die Bedieneinrichtung 103 den Formgedächtnis-Draht ansprechend auf die Bewegung des Fahrers mit Strom versorgen, beispielsweise durch Anschließen an eine Stromversorgung des Fahrzeugs. Der Formgedächtnis-Draht kann auf einer ersten Gewinderolle aufgerollt sein und ansprechend auf einen Stromfluss eine Drehbewegung der ersten Gewinderolle bewirken, beispielsweise wie unten zu den Figuren 3 bis 7 beschrieben. Dabei kann die erste Gewinderolle eine Antriebsachse des Innenspiegels 100 bilden und den Innenspiegel 100 um einen ersten Drehwinkel drehen. Auch kann der Formgedächtnis-Draht auf einer zweiten Gewinderolle aufgerollt sein, die den Innenspiegel 100 um einen zweiten Drehwinkel drehen kann. Dabei kann sich der Durchmesser der zweiten Gewinderolle von dem Durchmesser der ersten Gewinderolle unterscheiden, beispielsweise wie unten zu den Figuren 3 bis 7 beschrieben.

Die Schwenkeinrichtung 102 kann einen weiteren Aktuator umfassen, der den Innenspiegel 100 von der Abblendposition 112 in die Normalposition 110 zurückbewegen kann. Der weitere Aktuator kann dabei einen zweiten Formgedächtnis-Aktuator umfassen, der ähnlich aufgebaut sein kann wie der oben beschriebene erste Formgedächtnis-Aktuator.

Es ist selbst möglich, dass beide Formgedächtnis-Aktuatoren unabhängig voneinander gesteuert werden. So kann der zweite Formgedächtnis-Aktuator nach einer bestimmten Zeit den Innenspiegel 100 wieder in die Normalposition 110 zurückbewegen. Alternativ kann der zweite Formgedächtnis-Aktuator abhängig von einer Blendsituation, beispielsweise detektierbar durch eine Sensoreinrichtung, den Innenspiegel 100 wieder in die Normalposition 110 zurückbewegen, wobei diese Bewegung auch über die Sensoreinrichtung erfassbar sein kann. Auch ist es möglich, dass der zweite Formgedächtnis-Aktuator abhängig von einer Bewegung des Fahrers den Innenspiegel 100 wieder in die Normalposition 110 zurückbewegt. In einer Ausführungsform kann der zweite Formgedächtnis-Aktuator abhängig von einer Abkühlung des Formgedächtnisdrahtes des ersten Formgedächtnis-Aktuators den Innenspiegel 100 wieder in die Normalposition 110 zurückbewegen.

Vorteilhafterweise kann der weitere Aktuator ein Federelement aufweisen. Dabei kann das Federelement abhängig von einer Abkühlung des Formgedächtnisdrahtes des ersten Formgedächtnis-Aktuators den Innenspiegel 100 wieder in die Normalposition 110 zurückbewegen. Die Kraft des Federelements kann nämlich gegen die Kraft der Ausdehnung des Formgedächtnisdrahtes des ersten Formgedächtnis-Aktuators gerichtet sein, um bei Abkühlung des Drahtes eine langsame Rückholung in die Normalposition 110 zu bewirken.

Erfindungsgemäß bevorzugt ist, dass die Bedieneinrichtung 103 zumindest einen Sensor der Sensoreinrichtung umfasst, um eine Bewegung des Fahrers, insbesondere eine Armbewegung des Fahrers in Richtung des Innenspiegels, detektieren zu können. Dabei kann die Bedieneinrichtung 103 ansprechend auf einen Schwellwert der detektierten Bewegung des Fahrers die Schwenkeinrichtung 102 aktivieren. Beispielsweise kann bei Überschreiten eines vorgegebenen Schwellwerts die Schwenkeinrichtung 102 aktiviert werden, so dass sich der Innenspiegel 100 in die Abblendposition 112 bewegen kann.

Figur 1b zeigt eine schematische Darstellung eines gestensteuerbaren Innenspiegels 100, der entsprechend Figur la eine Schwenkeinrichtung 102, eine Bedieneinrichtung 103, 107 und einen Keilspiegel 104 aufweist. Bei dieser Ausführungsform weist der Innenspiegel 100 auch einen FGL-Draht-Aktuator auf und ist mit einer Sensoreinrichtung versehen, um eine Abblendung über Gestensteuerung zu realisieren. Dabei kann der Innenspiegel 100 durch eine Drehbewegung so abklappen, dass der Fahrer nicht mehr geblendet wird, und die Bewegung kann durch die Schwenkreichrichtung 102 automatisch ausgeführt werden, selbst geräuschlos. In einer Ausführungsform kann der Fahrer durch eine Handbewegung oder Geste oder auch durch eine Annäherung die Abklapp-, Aufklapp- oder Umklappbewegung des Innenspiegels 100 nicht nur von der in Figur 1b dargestellten Normalposition in eine nicht dargestellte Abblendposition, hervorrufen, sondern auch rückgängig machen.

Im Folgenden ist eine mögliche Interaktion des Fahrers mit dem Innenspiegel 100 beschrieben, die eine Bewegung des Innenspiegels 100 bewirkt. Wenn eine Bewegung 1 des Fahrers in bestimmter Weise in einem ersten Erfassungsbereich der Bedieneinrichtung 103, der auch als Gestenkanal bezeichenbar ist, ausgeführt wird, kann sich der Winkel zwischen einem Spiegelhalter 105 und dem Keilspiegel 104 in dem Maße verändern, dass eine erste, dem Fahrer zugewandte Fläche des Keilspiegels 104 ein wenig mehr nach oben zum Dach des Fahrzeugs zeigt, damit der Fahrer nicht mehr geblendet wird. Der Aktuator der Schwenkeinrichtung 102, der hinter dem Keilspiegel 104 des Innenspiegels 100 liegen kann, kann für diese automatische Bewegung sorgen. Ist der Aktuator ein FGL-Aktuator, bei dem der Draht hinter dem Keilspiegel 104 liegt und bei einer über die Sensoreinrichtung der Bedieneinrichtung 103 erfassten Geste des Fahrers mit Strom durchflossen werden kann, kann sich der Draht dadurch erwärmen und verkürzen, was in eine Drehbewegung am Drehpunkt 106 des Innenspiegels 100 umgesetzt wird. Eine weitere Bewegung im Gestenkanal der Sensoreinrichtung kann für eine Rückdrehung des Innenspiegels 100 sorgen. Alternativerweise kann auch durch Betätigen einer virtuellen Taste in einem zweiten Erfassungsbereich der Bedieneinrichtung 107 eine Rückdrehung erzwungen werden. Der zweite Erfassungsbereich kann dabei näher an der Spiegelfläche des Keilglases 104 als der erste Erfassungsbereich angeordnet werden, um eine Taste besser zu simulieren.

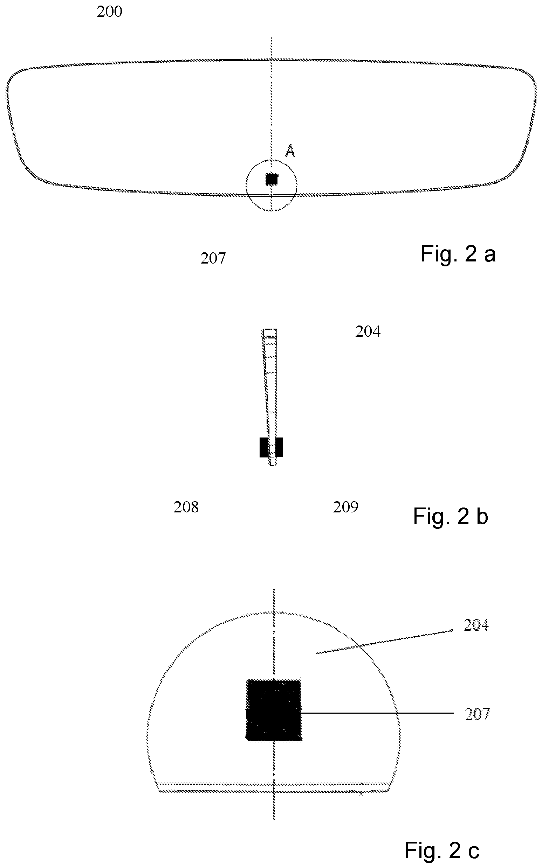

Die Figuren 2a bis 2c zeigen einen weiteren erfindungsgemäßen Innenspiegel 200, der einen verkippbaren Keilspiegel 204 und eine Sensoreinrichtung 207 enthält. Die Keilform des Keilspiegels 204 ist am besten in Figur 2b zu sehen. Figur 2b ist auch zu entnehmen, dass die Sensoreinrichtung 207 einen ersten Sensor 208 auf der einem Fahrer zugewandten, spiegelnden, ersten Fläche des Keilspiegels 204 aufweist, während auf der Rückseite des Keilspiegels 204 ein zweiter Sensor 209 angebracht ist. Bei dem ersten Sensor 208 kann es sich um einen TOF-Sensor mit ALS-Funktion handeln, während der zweite Sensor nur eine ALS-Funktion erfüllen soll. Dies eröffnet ein breites Spektrum zum Aktivieren einer nicht gezeigten Schwenkeinrichtung, die jedoch in Analogie zu der im Zusammenhang mit den Figuren 1a und 1b beschriebenen Schwenkeinrichtung ausgeformt sein kann. Die Sensoren 208 und 209 können auch in einem ausgeformt sein.

Über den Sensor 208 ist zum Einen eine Gestensteuerung möglich, und zwar für Bewegungen in einem Abstand von mehr als 10 mm von dem Keilglas 204 beabstandet. Innerhalb des Bereichs von 10 mm zum Keilglas 204 kann eine Tastenfunktion erfüllt werden, mit der beispielsweise von einer Gestensteuerung der Schwenkeinrichtung auf eine vollautomatische Steuerung umgeschaltet werden kann. Bei einer vollautomatischen Lösung wird über den ersten Sensor 208 erfasst, ob eine Blendsituation vorliegt und das Keilglas 204 in seine Abblendposition zu klappen ist. Die Berücksichtigung der Ausgabedaten des zweiten Sensors 209 ermöglicht auch die Berücksichtigung des Umgebungslichts, also des Lichts, das durch eine nicht gezeigte Windschutzscheibe des Fahrzeugs vom Fahrer wahrgenommen wird. Die Ausgabesignale der beiden Sensoren 208 und 209 können gemeinsam ausgewertet werden, beispielsweise durch eine Differenzschaltung, um so auch speziellen Fahrsituationen Rechnung zu tragen, wie sie beim Einfahren in einen Tunnel und Verlassen eines Tunnels auftreten können. Über den zweiten Sensor 209 ist somit auch eine Unterscheidung zwischen Tag und Nacht möglich. Diese Unterscheidung kann bei dem Verklappen des Keilglases 204 berücksichtigt werden, und zwar im Zusammenhang mit einer für ein Verklappen zu überschreitenden Schwelle und/oder aber für einen Klappwinkel.

Es ist erfindungsgemäß auch möglich, dass die Schwenkeinrichtung nicht nur in Abhängigkeit von Ausgabesignalen der Sensoreinrichtung 207 betätigt wird, sondern weitere Signale berücksichtigt werden, wie Informationen zu einem Scheinwerfer und/oder Zeitsignale, anhand derer auch entschieden werden kann, ob es Tag oder Nacht ist.

Figur 3 zeigt eine dreidimensionale Darstellung eines gestensteuerbaren Innenspiegels 300 für ein Fahrzeug gemäß einer noch weiteren Ausführungsform der Erfindung. Der Innenspiegel 300 kann einen Aufbau in Analogie zu dem des Innenspiegels 100 von Figur la oder 1b haben oder des Innenspiegels 200 von Figur 2a bis 2c aufweisen. Das Gehäuse des Innenspiegels 300 ist in Figur 3 geöffnet dargestellt, so dass verschiedene mechanische Komponenten, die innerhalb des nicht dargestellten Gehäuses untergebracht sind, sichtbar sind. Das Keilglas ist auf einer dem Betrachter abgewandten und daher nicht sichtbaren Seite einer Tragplatte 309 angebracht.

Der Innenspiegel 300 umfasst einen Antrieb 301, mit dem sich ein Kugelgelenk 302 (in Figur 3 dargestellt durch ein Kalottenteil bzw. eine Kugelkalotte oder Kugelplatte) drehen lässt, um den Innenspiegel 300 entsprechend zu verdrehen. Der Antrieb 301 umfasst einen FGL-Draht 303 und ist als Jojo-Antrieb ausgeführt. Ein Jo-Antrieb dreht nur in eine Richtung, während die andere Richtung mit einer Feder zurückgezogen wird, während es beim Jojo-Antrieb eine zweite Wicklung, die genau in die Gegenrichtung dreht, gibt, so dass der Jojo-Antrieb in beide Richtungen drehen kann. In der Ausführungsform der Figur 3 umfasst der Antrieb 301 eine erste Achse 304 und eine zweite Achse 305. Die erste Achse 304 kann mit zwei Windungen versehen sein, die in verschiedene Richtungen drehen, um einen Jojo-Antrieb zu realisieren. Auch die zweite Achse 305 kann mit zwei Windungen versehen sein, die in verschiedene Richtungen drehen, um einen Jojo-Antrieb zu realisieren.

Der Antrieb 301 der Schwenkeinrichtung kann eine Drehung von mindestens 90° durchführen und einen Handhebel einer herkömmlichen Abblendvorrichtung ersetzen. In der Ausführungsform der Figur 3 umfasst der Antrieb 301 zwei Achsen 304, 305, während auch mehr als zwei Achsen denkbar sind, ebenso wie nur eine Achse 304. Aber für eine Drehung um 90° reichen in der Regel zwei Achsen aus.

In der Ausführungsform der Figur 3 umfasst der Antrieb 301 zwei stabile Punkte am Ende der Achsen 304, 305, die in das Kalottenteil des Kugelgelenks 302 eingreifen. Damit kann ein zufälliges Verstellen nach der Drehung verhindert werden.

Die FGL-Drähte 303 sind auf Rollen 306, 307, welche in Richtung der zwei Achsen 304, 305 angeordnet sind, aufgewickelt und können durch Stromimpulse erwärmt werden und sich so verkürzen, um eine Drehung um 90° zu vollziehen.

Der Antrieb 301 umfasst eine Fixierungsplatte 308, die zur Fixierung der Drähte 303 auf den Rollen 306, 307 dient. Die Drähte 303 werden von der Fixierungsplatte 308 über die zweite Rolle 307 und dann über die erste Rolle 306 geführt und dort auch fixiert. In einer Ausführungsform kann ein Steuergerät seine Stromanschlüsse an der Fixierungsplatte 308 aufweisen. Die Steuerung kann dann eine exakte Messung der Innenwiderstände durchführen, um die Drähte 303 exakt zu erwärmen und die Kraft zu dosieren.

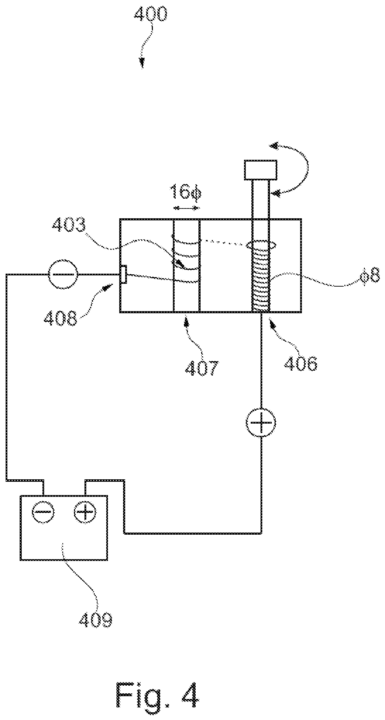

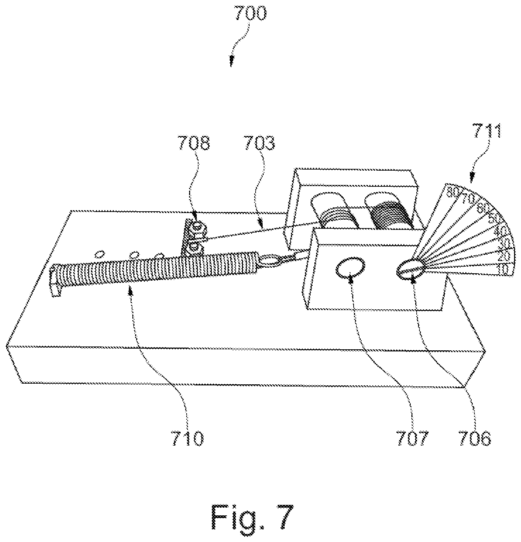

Figur 4 zeigt eine schematische Darstellung in Draufsicht eines zweiachsigen Mini-Jos 400 für einen gestensteuerbaren Innenspiegel gemäß einer weiteren erfindungsgemäßen Ausführungsform. Der Mini-Jo 400 kann beispielsweise in einem Antrieb 301 für den Innenspiegel 300 eingesetzt werden. Wie bereits erläutert, bedeutet der Begriff Jo, dass der Antrieb nur in eine Richtung dreht und die andere Richtung beispielsweise mit einer Feder zurückgezogen werden kann, beispielsweise gemäß der Darstellung der Figur 7.

In der Ausführungsform der Figur 4 umfasst der Mini-Jo 400 eine erste Gewinderolle 406, beispielsweise entsprechend der in Figur 3 dargestellten ersten Gewinderolle 306, und eine zweite Gewinderolle 407, beispielsweise entsprechend der in Figur 3 dargestellten zweiten Gewinderolle 307. Dabei ist die zweite Gewinderolle 407 dicker als die erste Gewinderolle 406. Die erste Gewinderolle 406 kann beispielsweise einen Durchmesser von 8 mm und die zweite Gewinderolle 407 einen Durchmesser von 16 mm aufweisen. Andere Dicken bzw. Durchmesser sind ebenfalls realisierbar. Auf der dicken zweiten Gewinderolle 407 ist der Hauptteil eines Windungen bildenden Drahts 403 aufgerollt, während auf der schmalen ersten Gewinderolle 406 nur wenige Windungen aufgerollt sind. Die schmale erste Gewinderolle 406 kann als Antriebsachse vorgesehen sein und kann hohl sein, um den Draht 403 von innen mit Strom zu versorgen. Der Draht 403 ist mit einem Gehäuse verbunden (Fixierungspunkt 408 beispielsweise an einer Fixierungsplatte 308 wie oben zu Figur 3 beschrieben), wo er mit Strom versorgt wird, geht dann auf die dicke zweite Rolle 407, wo er mehrere Windungen hat, und verläuft schließlich zur dünneren ersten Antriebsrolle 406. Dort taucht er durch ein Loch ins Innere der Rolle 406 und wird nach außen zu einer Stromversorgung 409 geführt. Die Stromversorgung 409 kann von einer Autobatterie bereitgestellt werden.

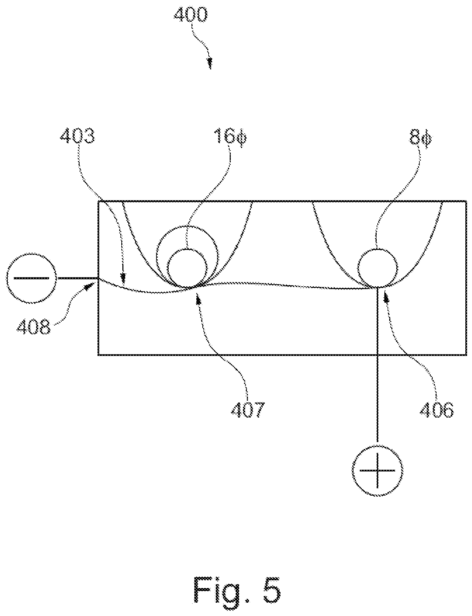

Figur 5 zeigt eine schematische Darstellung in Seitenansicht des zweiachsigen Mini-Jo 400 aus Figur 4. In der Ausführungsform der Figur 5 ist der Draht 403 am Fixierungspunkt 408 fest mit dem Gehäuse verbunden, wo er auch mit Strom versorgt wird, verläuft dann auf die dicke zweite Rolle 407, wo er mehrere Windungen hat, und verläuft dann weiter zur schmalen ersten Antriebsrolle 406. Dort taucht er durch ein Loch ins Innere der Rolle 406 und wird nach außen zur Stromversorgung 409 geführt. Die Zuleitungen zur Stromversorgung sind mit den Zeichen "+" und "-" gekennzeichnet.

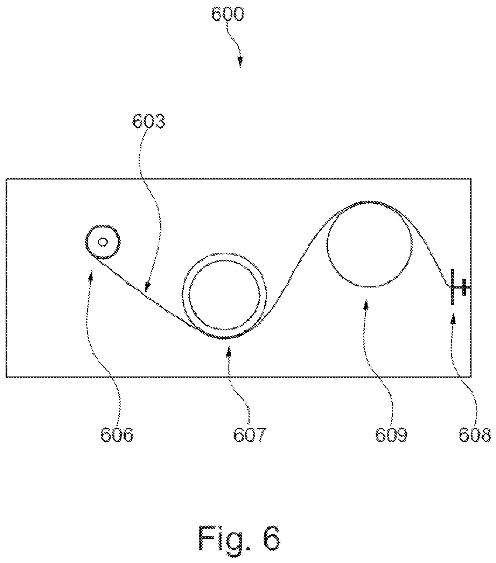

Figur 6 zeigt eine schematische Darstellung in Draufsicht eines dreiachsigen Mini-Jo 600s für einen gestensteuerbaren Innenspiegel gemäß einer weiteren erfindungsgemäßen Ausführungsform. Der Mini-Jo 600 kann beispielsweise in einem Antrieb 301 für einen Innenspiegel 300, wie in Figur 3 beschrieben, eingesetzt werden. Der dreiachsige Mini-Jo 600 kann dem zweiachsigen Mini-Jo 400 aus den Figuren 4 und 5 mit dem Unterschied entsprechen, dass ein Draht 603 noch über eine weitere dritte Rolle geführt wird.

In der Ausführungsform der Figur 6 ist der Draht 603 an einem Fixierungspunkt 608 fest mit dem Gehäuse verbunden, wo er mit Strom versorgt wird, verläuft dann über die dritte Rolle 609, wo er mehrere Windungen aufweist, weiter zur zweiten Rolle 607 und zur ersten Rolle 606, die als Antriebsrolle dienen kann. Dort taucht er durch ein Loch ins Innere der Rolle 606 und wird nach außen zu einer Stromversorgung geführt.

Mit dem dreiachsigen Mini-Jo 600 können mehr Drehwinkel erzeugt werden als mit einem zweiachsigen Mini-Jo. In einer Ausführungsform, die nicht in Figur 6 dargestellt ist, umfasst der Mini-Jo weitere Achsen, um noch größere Drehwinkel realisieren zu können.

Die in den Figuren 4 bis 6 dargestellten Ausführungsformen können auch als Mini-Jojos realisiert werden, d.h. mit zwei Drähten, die jeweils entgegengesetzt zueinander drehen. Ebenfalls kann ein Federelement eingesetzt werden, das den Keilspiegel langsam wieder in die Ausgangsposition zieht. In der Variante mit Federelement kann der Antrieb beispielsweise so realisiert sein, dass durch die Gestenbewegung nur die Abblendposition angefahren wird, während die alte Position (Normalposition) nach einer bestimmten Abkühlzeit des Drahtes wieder automatisch eingestellt wird. Bei der Variante mit Jojo kann jede Gestenhandbewegung ihre Position finden.

Figur 7 zeigt eine dreidimensionale Darstellung eines Antriebs 700 für einen gestensteuerbaren Innenspiegel, der als Jo mit Federelement realisiert ist. Der Antrieb 700 kann beispielsweise als Antrieb 301 für einen Innenspiegel 100, 200, 300, wie in den Figuren 1 bis 3 beschrieben, dienen.

In der Ausführungsform der Figur 7 ist wieder ein Draht 703 an einem Fixierungspunkt 708 fest mit einem Gehäuse verbunden, wo er mit Strom versorgt wird, verläuft dann über eine zweite Rolle 707, wo er mehrere Windungen aufweist, weiter zu einer ersten Rolle 706, die als Antriebsrolle dienen kann. Dort taucht er durch ein Loch ins Innere der Rolle 706 und wird nach außen zu einer Stromversorgung geführt. Der Draht 703 mit den zwei Rollen 706, 707 bilden das Jo-Element, das von einer Ausgangsposition (Normalposition) in eine Richtung dreht, während ein Federelement 710 eine Rückdrehung in die Ausgangsposition bewirkt. Es lassen sich mit dem Antrieb 700 verschiedene Drehwinkel 711 realisieren, beispielsweise im Bereich von 0° bis 90° wie auf der Skala angezeigt.

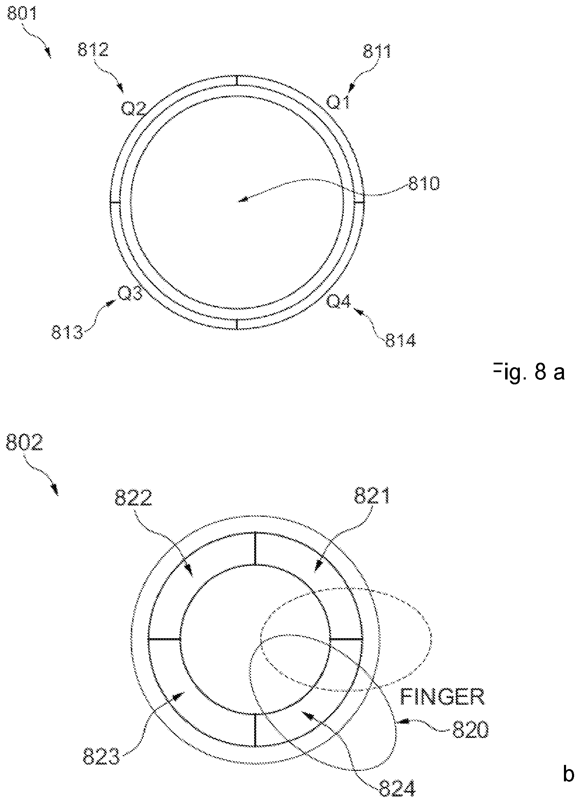

Figur 8a zeigt eine schematische Darstellung eines ersten Sensors 801 einer Sensoreinrichtung mit Leuchtdioden 811, 812, 813, 814 und einer TOF-Kamera 810 für einen gestensteuerbaren Innenspiegel gemäß der Erfindung. Der Sensor 801 kann beispielsweise in einem Innenspiegel 100, 200, 300, wie in den Figuren 1 bis 3 beschrieben, verwendet werden, nämlich als Teil der Bedieneinrichtung 103. In einer Ausführungsform kann für die Gestensteuerung im Innenspiegel ein LED-Array, beispielsweise mit Infrarot Leuchtdioden, wie in Figur 8a dargestellt, verwendet werden.

Bei der in Figur 8a dargestellten LED-Technik können die LEDs 811, 812, 813, 814 genutzt werden, um einen bestimmten Raum in vier Quadranten Q1 - Q4 auszuleuchten, und somit zu überwachen. Im Mittelpunkt kann sich die TOF-Kamera 810 als Empfänger befinden, die eine Änderung der Lichtverhältnisse aufgrund der Bewegung des Fahrers, beispielsweise durch Bewegung einer Hand erkennen kann. Genauer gesagt erfasst die TOF-Kamera 810 für jeden ihrer Bildpunkte die Zeit, die das von den LEDs 811 bis 814 ausgesandte Licht zur Hand und wieder zurück braucht. Diese Zeit ist direkt proportional zur Distanz. Somit kann innerhalb eines ersten vorgegebenen Distanzintervalls eine Gestensteuerung durchgeführt werden, während zudem innerhalb des zweiten vorgegebenen Distanzintervalls virtuelle Tasten bereitstellbar sind. Über eine erste Taste kann beispielsweise ein vollautomatisches Abblenden eingestellt werden; und über eine zweite Taste kann beispielsweise ein Abblenden in Abhängigkeit von einer Beleuchtungseinrichtung des Fahrzeugs eingestellt werden. So könnte also grundsätzlich beim Einschalten von Scheinwerfern eine Abblendposition und beim Ausschalten der Scheinwerfer eine Normalposition erzwungen werden.

Der Sensor 801 kann intuitive Bewegungsmuster erkennen und einem Aktuator ansteuern, so dass sowohl eine Drehung eines Innenspiegels von seiner Normalposition in seine Abblendposition als auch zurück möglich ist.

Figur 8b zeigt eine schematische Darstellung einer alternativen Sensoreinrichtung 802 mit vier TOF-Sensoren 821, 822, 823, 824, von denen jeder die Annäherung und die Position etwa eines Fingers 820 in einem Radius von bis etwa 20 cm erfassen und die entsprechenden X-, Y- und Z-Achsen-Positionsdaten des Fingers 820 an eine Elektronik senden. Das alles kann in Echtzeit erfolgen.

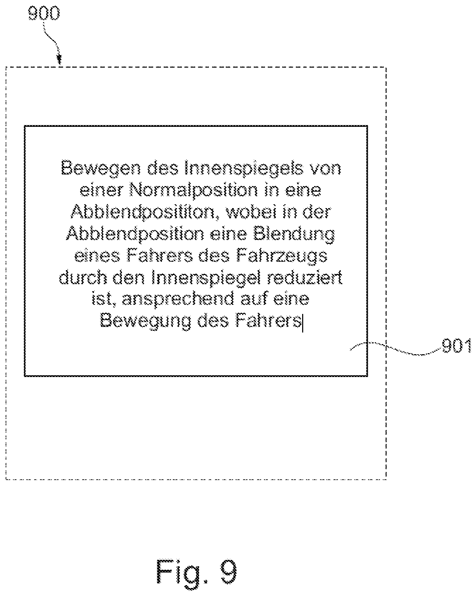

Figur 9 zeigt eine schematische Darstellung eines erfindungsgemäßen Verfahrens 900 zur gestengesteuerten Schwenkung eines Innenspiegels für ein Fahrzeug. Das Verfahren 900 kann ein Bewegen 901 des Innenspiegels von einer Normalposition in eine Abblendposition umfassen. Dabei ist ansprechend auf eine Bewegung des Fahrers der Innenspiegel in die Abblendposition bewegbar, in der eine Blendung eines Fahrers des Fahrzeugs durch den Innenspiegel reduziert ist. Das Bewegen 901 des Innenspiegels kann entsprechend der obigen Beschreibung zu den Figuren 1 bis 8 realisiert sein.

Durch ein Computerprogrammprodukt, das direkt in den internen Speicher eines digitalen Bordcomputers des Fahrzeugs geladen werden kann und Softwarecodeabschnitte umfasst, kann der Verfahrensschritt 901 ausgeführt werden kann.

### Bezugszeichenliste

- 1: Fahrerbewegung
- 100: Innenspiegel
- 101: Rahmen
- 102: Schwenkeinrichtung
- 103: Bedieneinrichtung
- 104: Keilspiegel
- 105: Spiegelhalter
- 106: Drehpunkt
- 107: Bedieneinrichtung
- 110: Normalposition
- 112: Abblendposition
- 200: Innenspiegel
- 204: Keilspiegel
- 207: Sensoreinrichtung
- 208: Sensor
- 209: Sensor
- 300: Innenspiegel
- 301: Antrieb
- 302: Kugelgelenk
- 303: FGL-Draht
- 304: Achse
- 305: Achse
- 306: Rolle
- 307: Rolle
- 308: Fixierungsplatte
- 309: Trageplatte
- 400: Mini-Jo
- 403: Draht
- 406: Gewinderolle
- 407: Gewinderolle
- 408: Fixierungspunkt
- 409: Stromversorgung
- 600: Mini-Jo
- 603: Draht
- 606: Rolle
- 607: Rolle
- 608: Fixierungspunkt
- 609: Rolle
- 700: Antrieb
- 703: Draht
- 706: Rolle
- 707: Rolle
- 708: Fixierungspunkt
- 710: Federelement
- 711: Drehwinkel
- 801: Sensoreinrichtung
- 802: Sensoreinrichtung
- 810: TOF-Kamera
- 811: Leuchtdiode
- 812: Leichtdiode
- 813: Leuchtdiode
- 814: Leuchtdiode
- 820: Finger
- 821: TOF-Sensor
- 822: TOF-Sensor
- 823: TOF-Sensor
- 824: TOF-Sensor
- 900: Verfahren
- 901: Bewegung

## Patentansprüche

1. Schwenkbarer Innenspiegel (100, 200, 300) für ein Fahrzeug, mit
• einer Spiegelfläche, insbesondere in Form einer ersten Fläche eines Keilspiegels (104, 204),
• einer Sensoreinrichtung (207, 801, 802) zur Erfassung zumindest einer Geste eines Fahrers des Fahrzeugs und/oder auf die erste Fläche des Keilspiegels (104, 204) auftreffenden Lichts, und
• einer Schwenkeinrichtung (102) zum Verschwenken der Spiegelfläche von einer Normalposition (110) in zumindest eine Abblendposition (112), in der eine Blendung des Fahrers durch an der Spiegelfläche reflektiertes Licht reduziert ist, wobei die Schwenkeinrichtung (102) in Abhängigkeit zumindest eines Ausgabesignals der Sensoreinrichtung (207) aktivierbar ist
**dadurch gekennzeichnet, dass**
die Sensoreinrichtung (207, 801, 802) für eine Lichtlaufzeitmessung geeignet und Bestandteil einer Bedieneinrichtung (103, 107) für die Schwenkeinrichtung (102) ist, wobei
die Bedieneinrichtung (103, 107) innerhalb eines ersten Bereichs des Innenspiegels (100, 200, 300) Bewegungsmuster erkennt und/oder innerhalb eines zweiten Bereichs des Innenspiegels (100, 200, 300) zumindest eine virtuelle Taste bereitstellt.

2. Innenspiegel nach Anspruch 1, **dadurch gekennzeichnet, dass**
die Sensoreinrichtung (207, 801, 801) zumindest einen ersten Sensor (208, 810, 821-824) in Form eines TOF-Sensors, insbesondere umfassend eine TOF-Kamera, umfasst, wobei vorzugsweise die Sensoreinrichtung (207) zudem zumindest einen zweiten Sensor (209) zur Erfüllung einer ALS-Funktion umfasst.

3. Innenspiegel nach Anspruch 2, **dadurch gekennzeichnet, dass**
der erste Sensor (208, 810, 821-824) auf der die Spiegelfläche darbietenden Seite des Innenspiegels (100, 200, 300), insbesondere an der Spiegelfläche, angebracht ist, und/oder
ein erster zweiter Sensor auf der die Spiegelfläche darbietenden Seite des Innenspiegels (100, 200, 300), insbesondere an der Spiegelfläche, angebracht ist, und/oder ein zweiter zweiter Sensor (209) auf der der Spiegelfläche gegenüberliegenden Seite des Innenspiegels (100, 200, 300), insbesondere an der der Spiegelfläche gegenüberliegenden Fläche des Keilspiegels (104, 204), angebracht ist, wobei
vorzugsweise der erste Sensor (208) und der erste zweite Sensor in einem ausgeformt sind.

4. Innenspiegel nach Anspruch 2 oder 3, **dadurch gekennzeichnet, dass**
die Schwenkeinrichtung (102) in Abhängigkeit eines Vergleichs von Ausgabesignalen des ersten und zumindest eines zweiten Sensors (208, 209), vorzugsweise durch Differenzbildung, aktivierbar ist, und/oder
die Schwenkeinrichtung (102) in Abhängigkeit eines Vergleichs von Ausgabesignalen des ersten zweiten und des zweiten zweiten Sensors (208, 209), vorzugsweise durch Differenzbildung, aktivierbar ist.

5. Innenspiegel nach einem der vorangehenden Ansprüche, **dadurch gekennzeichnet, dass**
die Schwenkeinrichtung (102) in Abhängigkeit von Signalen einer Einrichtung des Fahrzeuges aktivierbar ist, die charakteristisch für die Lichtverhältnisse in der Umgebung des Fahrzeuges ist, insbesondere umfassend eine Beleuchtungseinrichtung des Fahrzeugs , wie in Form von Scheinwerfern und/oder einer Fahrzeuginnenbeleuchtung, und/oder einen Zeitgeber und/oder eine Positionsbestimmungseinrichtung.

6. Innenspiegel nach einem der vorangehenden Ansprüche, **dadurch gekennzeichnet, dass**
die Bedieneinrichtung (103, 107) innerhalb eines ersten Abstandsintervalls zur Spiegelfläche Bewegungsmuster erkennt und/oder innerhalb eines zweiten Abstandsintervalls zumindest eine virtuelle Taste bereitstellt, wobei das erste Abstandsintervall in dem ersten Bereich der Bedieneinrichtung (103) und das zweite Abstandsintervall in dem zweiten Bereich der Bedieneinrichtung (107) bereitgestellt ist.

7. Innenspiegel nach Anspruch 6, **dadurch gekennzeichnet, dass**
das zweite Abstandsintervall näher an der Spiegelfläche als das erste Abstandsintervall angeordnet ist.

8. Innenspiegel nach einem der vorangehenden Ansprüche, **dadurch gekennzeichnet, dass**
die Schwenkeinrichtung (102) einen Formgedächtnis-Aktuator (301) zum Verschwenken der Spiegelfläche umfasst, wobei
vorzugsweise der Formgedächtnis-Aktuator (301) einen Formgedächtnis-Draht (303, 403, 603, 703) umfasst, der ansprechend auf einen Stromfluss durch den Formgedächtnis-Draht (303, 403, 603, 703) seine Länge verändert.

9. Innenspiegel nach Anspruch 8, **dadurch gekennzeichnet, dass**
die Bedieneinrichtung (103) ausgelegt ist, den Formgedächtnis-Draht (303, 403, 603, 703) mit Strom zu versorgen, insbesondere aus einer Stromversorgung (409) des Fahrzeugs.

10. Innenspiegel nach Anspruch 8 oder 9, **dadurch gekennzeichnet, dass**
der Formgedächtnis-Draht (303, 403, 603, 703) auf einer ersten Gewinderolle (306, 406, 606, 706) aufgerollt ist und ansprechend auf den Stromfluss eine Drehbewegung der ersten Gewinderolle (306, 406, 606, 706) bewirkt, wobei
vorzugsweise die erste Gewinderolle (306, 406, 606, 706) eine Antriebsachse (304) des Innenspiegels (100, 200, 300) bildet und ausgelegt ist, die Spiegelfläche zumindest um einen ersten Drehwinkel zu drehen.

11. Innenspiegel nach Anspruch 10, **dadurch gekennzeichnet, dass**
der Formgedächtnis-Draht (303, 403, 603, 703) auf einer zweiten Gewinderolle (307, 407, 607, 707) aufgerollt ist, die ausgelegt ist, die Spiegelfläche um zumindest einen zweiten Drehwinkel zu drehen, wobei
vorzugsweise der Durchmesser der zweiten Gewinderolle (307, 407, 607, 707) sich von dem Durchmesser der ersten Gewinderolle (306, 406, 606, 706) unterscheidet.

12. Innenspiegel nach einem der Ansprüche 8 bis 11, **dadurch gekennzeichnet, dass**
die Schwenkeinrichtung (102) einen weiteren Aktuator umfasst, der ausgelegt ist, die Spiegelfläche in die Normalposition (110) zurückzubewegen, wobei
vorzugsweise der weitere Aktuator einen zweiten Formgedächtnis-Aktuator oder ein Federelement (710) umfasst.

13. Fahrzeug mit einem schwenkbaren Innenspiegel (100, 200, 300) nach einem der vorangehenden Ansprüche, **gekennzeichnet durch**
eine Kontrolleinrichtung in Verbindung mit
der Sensoreinrichtung (207, 801, 802),
der Schwenkeinrichtung (102),
der Bedieneinrichtung (103, 107),
einer Einrichtung, die charakteristisch für die Lichtverhältnisse in der Umgebung des Fahrzeuges ist,
einer Beleuchtungseinrichtung, wie in Form von Scheinwerfern und/oder einer Fahrzeuginnenbeleuchtung,
einem Zeitgeber und/oder
einer Positionsbestimmungseinrichtung.

14. Verfahren zum Verschwenken eines schwenkbaren Innenspiegels nach einem der Ansprüche 1 bis 12 für ein Fahrzeug nach Anspruch 13, **gekennzeichnet durch** folgende Schritte:
• Detektieren
• der Bewegung eines Fahrers des Fahrzeugs, insbesondere einer Armbewegung des Fahrers in Richtung des Innenspiegels oder eines Fingers innerhalb eines bestimmten Bereichs des Innenspiegels, und/oder
• von auf den Innenspiegel auftreffendem Licht; und
• Auslösen einer Bewegung des Innenspiegels von einer Normalposition in zumindest eine Abblendposition und/oder von der Abblendposition in die Normalposition in Abhängigkeit von dem Ergebnis der Detektion.

15. Verfahren nach Anspruch 14, **dadurch gekennzeichnet, dass**
beim Wechsel von der Normalposition in die Abblendposition und/oder von der Abblendposition in die Normalposition eine Fahrzeugfunktion, insbesondere eine Einstellung einer Beleuchtungseinrichtung, und/oder eine Zeitinformation und/oder ein Fahrzeugstandort berücksichtig werden kann, und/oder
ein Fahrer des Fahrzeugs auswählen kann, ob der Wechsel von der Normalposition in die Abblendposition und/oder von der Abblendposition in die Normalposition automatisch, über eines Gestensteuerung oder durch Betätigen einer virtuellen Taste stattfindet, wobei vorzugsweise bei Erfassung bestimmter, vorgegebener Lichtverhältnisse ein automatischer Wechsel eingeleitet wird.

## Claims

1. A pivotable internal mirror (100, 200, 300) for a vehicle, with
• a mirror surface, in particular in the form of a first surface of a wedge mirror (104, 204),
• a sensor device (207, 801, 802) for detecting at least one gesture of a driver of the vehicle and/or light impinging on the first surface of the wedge mirror (104, 204), and
• a pivoting device (102) for pivoting the mirror surface from a normal position (110) into at least one anti-glare position (112), in which a glare experienced by the driver as a result of light reflected at the mirror surface is reduced, the pivoting device (102) being activatable as a function of at least one output signal from the sensor device (207),
**characterized in that**
the sensor device (207, 801, 802) is suitable for measuring a light propagation time and is a component of an operator control device (103, 107) for the pivoting device (102), wherein
the operator control device (103, 107) detects motion patterns within a first region of the internal mirror (100, 200, 300) and/or provides at least one virtual button within a second region of the internal mirror (100, 200, 300).

2. The internal mirror according to Claim 1, **characterized in that**
the sensor device (207, 801, 801) comprises at least one first sensor (208, 810, 821-824) in the form of a TOF sensor, in particular comprising a TOF camera, wherein the sensor device (207) preferably additionally comprises at least one second sensor (209) for performing an ALS function.

3. The internal mirror according to Claim 2, **characterized in that**
the first sensor (208, 810, 821-824) is mounted on the side of the internal mirror (100, 200, 300) featuring the mirror surface, in particular on the mirror surface, and/or
a first second sensor is mounted on the side of the internal mirror (100, 200, 300) featuring the mirror surface, in particular on the mirror surface, and/or
a second second sensor (209) is mounted on the opposite side of the internal mirror (100, 200, 300) from the mirror surface, in particular on the opposite surface of the wedge mirror (104, 204) from the mirror surface, wherein
the first sensor (208) and the first second sensor are preferably formed as one.

4. The internal mirror according to Claim 2 or 3, **characterized in that**
the pivoting device (102) is activatable as a function of a comparison of output signals from the first and at least one second sensor (208, 209), preferably by subtraction, and/or
the pivoting device (102) is activatable as a function of a comparison of output signals from the first second and second second sensors (208, 209), preferably by subtraction.

5. The internal mirror according to any one of the preceding claims, **characterized in that**
the pivoting device (102) is activatable as a function of signals from a device of the vehicle which characterizes the light conditions in the vehicle surroundings, in particular comprising a lighting device of the vehicle, such as in the form of headlamps and/or internal vehicle lighting, and/or a timer and/or a position determining device.

6. The internal mirror according to any one of the preceding claims, **characterized in that**
the operator control device (103, 107) detects motion patterns within a first spacing interval relative to the mirror surface and/or provides at least one virtual button within a second spacing interval, wherein the first spacing interval is provided in the first region of the operator control device (103) and the second spacing interval is provided in the second region of the operator control device (107).

7. The internal mirror according to Claim 6, **characterized in that**
the second spacing interval is arranged closer to the mirror surface than the first spacing interval.

8. The internal mirror according to any one of the preceding claims, **characterized in that**
the pivoting device (102) comprises a shape memory actuator (301) for pivoting the mirror surface, wherein
the shape memory actuator (301) preferably comprises a shape memory wire (303, 403, 603, 703), which changes length in response to a current flow through the shape memory wire (303, 403, 603, 703).

9. The internal mirror according to Claim 8, **characterized in that**
the operator control device (103) is configured to supply the shape memory wire (303, 403, 603, 703) with power, in particular from the vehicle power supply (409).

10. The internal mirror according to Claim 8 or 9, **characterized in that**
the shape memory wire (303, 403, 603, 703) is rolled on a first threaded roll (306, 406, 606, 706) and brings about a rotational motion of the first threaded roll (306, 406, 606, 706) in response to current flow, wherein
the first threaded roll (306, 406, 606, 706) preferably forms a drive axis (304) of the internal mirror (100, 200, 300) and is configured to turn the mirror surface by at least a first angle of rotation.

11. The internal mirror according to Claim 10, **characterized in that**
the shape memory wire (303, 403, 603, 703) is rolled on a second threaded roll (307, 407, 607, 707), which is configured to turn the mirror surface by at least one second angle of rotation, wherein
the diameter of the second threaded roll (307, 407, 607, 707) preferably differs from the diameter of the first threaded roll (306, 406, 606, 706).

12. The internal mirror according to any one of Claims 8 to 11, **characterized in that**
the pivoting device (102) comprises a further actuator, which is configured to move the mirror surface back into the normal position (110), wherein
the further actuator preferably comprises a second shape memory actuator or a spring element (710).

13. A vehicle with a pivotable internal mirror (100, 200, 300) according to one of the preceding claims, **characterized by**
a control device in conjunction with
the sensor device (207, 801, 802),
the pivoting device (102),
the operator control device (103, 107),
a device which is characteristic for the light conditions in the vehicle surroundings,
a lighting device, such as in the form of headlamps and/or internal vehicle lighting,
a timer and/or
a position determining device.

14. A method for pivoting a pivotable internal mirror according to any one of Claims 1 to 12 for a vehicle according to Claim 13, **characterized by** the following steps:
• detecting
• movement of a driver of the vehicle, in particular a movement of the driver's arm in the direction of the internal mirror or of a finger within a given region of the internal mirror, and/or
• light impinging on the internal mirror; and
• triggering movement of the internal mirror from a normal position into at least one anti-glare position and/or from the anti-glare position into the normal position as a function of the detection result.

15. The method according to Claim 14, **characterized in that**
a vehicle function, in particular an adjustment of a lighting device, and/or time information and/or the location of the vehicle may be taken into account in the change from the normal position into the anti-glare position and/or from the anti-glare position into the normal position, and/or
a driver of the vehicle may select whether the change from the normal position into the anti-glare position and/or from the anti-glare position into the normal position takes place automatically, by way of gesture control or by actuation of a virtual button, wherein an automatic change is preferably initiated on detection of given, predetermined light conditions.

## Revendications

1. Rétroviseur intérieur pivotant (100, 200, 300) pour un véhicule, avec
• une surface réfléchissante, en particulier sous la forme d'une première surface d'un miroir cunéiforme (104, 204),
• un dispositif de détection (207, 801, 802), pour la détection d'au moins un geste d'un conducteur du véhicule et/ou de lumière incidente sur la première surface du miroir cunéiforme (104, 204), et
• un dispositif de pivotement (102), pour le pivotement de la surface réfléchissante d'une position normale (110) vers au moins une position anti-éblouissement (112), où un éblouissement du conducteur par la lumière réfléchie sur la surface réfléchissante est réduit, ledit dispositif de pivotement (102) étant activable en fonction d'au moins un signal de sortie du dispositif de détection (207),
**caractérisé en ce que**
le dispositif de détection (207, 801, 802) est adapté pour une mesure de temps de propagation lumineuse et fait partie d'un dispositif de commande (103, 107) pour le dispositif de pivotement (102),
ledit dispositif de commande (103, 107) reconnaissant des types de mouvements à l'intérieur d'une première zone du rétroviseur intérieur (100, 200, 300) et/ou rendant disponible au moins une touche virtuelle à l'intérieur d'une deuxième zone du rétroviseur intérieur (100, 200, 300).

2. Rétroviseur intérieur selon la revendication 1, **caractérisé en ce que**
le dispositif de détection (207, 801, 801) comprend au moins un premier capteur (208, 810, 821-824) sous la forme d'un capteur TOF, comportant en particulier une caméra TOF, le dispositif de détection (207) comprenant en outre préférentiellement au moins un deuxième capteur (209) pour l'exécution d'une fonction ALS.

3. Rétroviseur intérieur selon la revendication 2, **caractérisé en ce que**
le premier capteur (208, 810, 821-824) est disposé sur le côté du rétroviseur intérieur (100, 200, 300) constituant la surface réfléchissante, en particulier sur la surface réfléchissante, et/ou un premier deuxième capteur est disposé sur le côté du rétroviseur intérieur (100, 200, 300) constituant la surface réfléchissante, en particulier sur la surface réfléchissante, et/ou
un deuxième deuxième capteur (209) est disposé sur le côté du rétroviseur intérieur (100, 200, 300) opposé à la surface réfléchissante, en particulier sur la surface du miroir cunéiforme (104, 204) opposée à la surface réfléchissante, le premier capteur (208) et le premier deuxième capteur étant préférentiellement formés d'un seul tenant.

4. Rétroviseur intérieur selon la revendication 2 ou la revendication 3, **caractérisé en ce que**
le dispositif de pivotement (102) est activable en fonction d'une comparaison de signaux de sortie du premier et au moins d'un deuxième capteur (208, 209), préférentiellement par formation de différence, et/ou
le dispositif de pivotement (102) est activable en fonction d'une comparaison de signaux de sortie du premier deuxième et du deuxième deuxième capteur (208, 209), préférentiellement par formation de différence.

5. Rétroviseur intérieur selon l'une quelconque des revendications précédentes, **caractérisé en ce que**
le dispositif de pivotement (102) est activable en fonction de signaux d'un dispositif du véhicule, lequel est caractéristique pour les conditions lumineuses dans l'environnement du véhicule, comprenant en particulier un dispositif d'éclairage du véhicule, notamment sous forme de projecteurs et/ou d'un éclairage intérieur de véhicule, et/ou un minuteur et/ou un dispositif de détermination de position.

6. Rétroviseur intérieur selon l'une quelconque des revendications précédentes, **caractérisé en ce que**
le dispositif de commande (103, 107) reconnaît des types de mouvements à l'intérieur d'un premier intervalle de distance à la surface réfléchissante et/ou rend disponible au moins une touche virtuelle à l'intérieur d'un deuxième intervalle de distance, le premier intervalle de distance étant disponible dans la première zone du dispositif de commande (103) et le deuxième intervalle de distance dans la deuxième zone du dispositif de commande (107).

7. Rétroviseur intérieur selon la revendication 6, **caractérisé en ce que**
le deuxième intervalle de distance est plus proche de la surface réfléchissante que le premier intervalle de distance.

8. Rétroviseur intérieur selon l'une quelconque des revendications précédentes, **caractérisé en ce que**
le dispositif de pivotement (102) comprend un actionneur à mémoire de forme (301) pour le pivotement de la surface réfléchissante,
l'actionneur à mémoire de forme (301) comprenant préférentiellement un fil à mémoire de forme (303, 403, 603, 703) qui varie sa longueur en réaction à une circulation de courant dans le fil à mémoire de forme (303, 403, 603, 703).

9. Rétroviseur intérieur selon la revendication 8, **caractérisé en ce que**
le dispositif de commande (103) est prévu pour alimenter le fil à mémoire de forme (303, 403, 603, 703) en courant, provenant en particulier d'une alimentation en courant (409) du véhicule.

10. Rétroviseur intérieur selon la revendication 8 ou la revendication 9, **caractérisé en ce que**
le fil à mémoire de forme (303, 403, 603, 703) est enroulé sur un premier galet fileté (306, 406, 606, 706) et provoque un mouvement de rotation du premier galet fileté (306, 406, 606, 706) en réaction à la circulation de courant,
le premier galet fileté (306, 406, 606, 706) formant préférentiellement un axe d'entraînement (304) du rétroviseur intérieur (100, 200, 300) et étant prévu pour tourner la surface réfléchissante suivant au moins un premier angle de rotation.

11. Rétroviseur intérieur selon la revendication 10, **caractérisé en ce que**
le fil à mémoire de forme (303, 403, 603, 703) est enroulé sur un deuxième galet fileté (307, 407, 607, 707) prévu pour tourner la surface réfléchissante suivant au moins un deuxième angle de rotation,
le diamètre du deuxième galet fileté (307, 407, 607, 707) étant préférentiellement distinct du diamètre du premier galet fileté (306, 406, 606, 706).

12. Rétroviseur intérieur selon l'une quelconque des revendications 8 à 11, **caractérisé en ce que**
le dispositif de pivotement (102) comprend un autre actionneur, prévu pour ramener la surface réfléchissante vers la position normale (110),
ledit autre actionneur comprenant préférentiellement un deuxième actionneur à mémoire de forme ou un élément à ressort (710).

13. Véhicule avec un rétroviseur intérieur pivotant (100, 200, 300) selon l'une quelconque des revendications précédentes, **caractérisé par**
un dispositif de commande relié
au dispositif de détection (207, 801, 802),
au dispositif de pivotement (102),
au dispositif de commande (103, 107),
un dispositif, caractéristique pour les conditions lumineuses dans l'environnement du véhicule,
un dispositif d'éclairage, notamment sous forme de projecteurs et/ou d'un éclairage intérieur de véhicule,
un minuteur et/ou
un dispositif de détermination de position.

14. Procédé de pivotement d'un rétroviseur intérieur pivotant selon l'une quelconque des revendications 1 à 12 pour un véhicule selon la revendication 13, **caractérisé par** les étapes suivantes :
• détection
• du mouvement d'un conducteur du véhicule, en particulier d'un mouvement de bras du conducteur en direction du rétroviseur intérieur, ou d'un doigt à l'intérieur d'une zone déterminée du rétroviseur intérieur, et/ou
• de lumière incidente sur le rétroviseur intérieur ; et
• déclenchement d'un mouvement du rétroviseur intérieur d'une position normale vers au moins une position anti-éblouissement et/ou de la position anti-éblouissement vers la position normale en fonction du résultat de détection.

15. Procédé selon la revendication 14, **caractérisé en ce que**
lors du passage de la position normale à la position anti-éblouissement et/ou de la position anti-éblouissement à la position normale, une fonction du véhicule, en particulier le réglage d'un dispositif d'éclairage, et/ou une information temporelle et/ou une position de véhicule peuvent être pris en compte, et/ou
un conducteur du véhicule peut sélectionner si le passage de la position normale à la position anti-éblouissement et/ou de la position anti-éblouissement à la position normale a lieu automatiquement au moyen d'une commande gestuelle ou par actionnement d'une touche virtuelle, un changement automatique étant préférentiellement déclenché par détection de certaines conditions lumineuses prescrites.
